(19) Europäisches Patentamt
European Patent Office
Office européen des brevets

(11) **EP 4 641 499 B1**

(12) **EUROPEAN PATENT SPECIFICATION**

(45) Date of publication and mention
of the grant of the patent:
**01.07.2026 Bulletin 2026/27**

(21) Application number: **25171519.9**

(22) Date of filing: **20.04.2025**

(51) International Patent Classification (IPC):
**G06T 7/246** *(2017.01)*   **G06V 40/20** *(2022.01)*
**G06V 40/10** *(2022.01)*   **G06V 20/40** *(2022.01)*
**G06V 10/82** *(2022.01)*   **G06N 3/096** *(2023.01)*
**G06N 3/094** *(2023.01)*   **G06N 3/09** *(2023.01)*
**G06N 3/044** *(2023.01)*   **G06N 3/088** *(2023.01)*
**G06N 3/084** *(2023.01)*   **G06N 3/045** *(2023.01)*
**G06N 3/082** *(2023.01)*   **G06N 3/08** *(2023.01)*
**G06N 3/048** *(2023.01)*   **G06N 3/047** *(2023.01)*
**G06N 3/0464** *(2023.01)*   **G06N 3/0455** *(2023.01)*

(52) Cooperative Patent Classification (CPC):
**G06T 7/251; G06N 3/044; G06N 3/045;
G06N 3/0455; G06N 3/0464; G06N 3/047;
G06N 3/048; G06N 3/08; G06N 3/082; G06N 3/084;
G06N 3/088; G06N 3/09; G06N 3/094; G06N 3/096;
G06V 10/82;** (Cont.)

(54) **METHODS AND SYSTEMS FOR REAL TIME VIDEO DRIVEN HUMAN 3-D POSTURE ESTIMATION**

VERFAHREN UND SYSTEME ZUR VIDEOGESTEUERTEN ECHTZEIT-SCHÄTZUNG DER MENSCHLICHEN 3D-HALTUNG

PROCÉDÉS ET SYSTÈMES D'ESTIMATION DE POSTURE 3D HUMAINE COMMANDÉE PAR VIDÉO EN TEMPS RÉEL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.04.2024 IN 202421032922**

(43) Date of publication of application:
**29.10.2025 Bulletin 2025/44**

(73) Proprietor: **Tata Consultancy Services Limited
Maharashtra (IN)**

(72) Inventors:
• **AGARWAL, Swapna
700156 Kolkata, West Bengal (IN)**
• **SINHA, Aniruddha
700091 Kolkata, West Bengal (IN)**
• **GHOSE, Avik
700091 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(56) References cited:
• **PAVLLO DARIO ET AL: "3D Human Pose Estimation in Video With Temporal Convolutions and Semi-Supervised Training", 2019 IEEE/CVF CONFERENCE ON COMPUTER VISION AND PATTERN RECOGNITION (CVPR), IEEE, 15 June 2019 (2019-06-15), pages 7745 - 7754, XP033687247, DOI: 10.1109/CVPR.2019.00794**
• **KOCABAS MUHAMMED ET AL: "VIBE: Video Inference for Human Body Pose and Shape Estimation", 2020 IEEE/CVF CONFERENCE ON COMPUTER VISION AND PATTERN RECOGNITION (CVPR), IEEE, 13 June 2020 (2020-06-13), pages 5252 - 5262, XP033804789, DOI: 10.1109/CVPR42600.2020.00530**

- **THEODORIDIS THOMAS ET AL: "Cross-modal Variational Alignment of Latent Spaces", 2020 IEEE/CVF CONFERENCE ON COMPUTER VISION AND PATTERN RECOGNITION WORKSHOPS (CVPRW), IEEE, 14 June 2020 (2020-06-14), pages 4127 - 4136, XP033798796, DOI: 10.1109/ CVPRW50498.2020.00488**
- **AGARWAL SWAPNA ET AL: "An Image to 3d Cross-Modal Approach for Real-Time 3D Human Posture Estimation", 2024 IEEE INTERNATIONAL CONFERENCE ON IMAGE PROCESSING CHALLENGES AND WORKSHOPS (ICIPCW), IEEE, 27 October 2024 (2024-10-27), pages 4097 - 4101, XP034766028, DOI: 10.1109/ ICIPCW64161.2024.10769140**

(52) Cooperative Patent Classification (CPC): (Cont.)
**G06V 20/40; G06V 40/103;** G06T 2207/20081; G06T 2207/20084; G06T 2207/30196

**Description**

CROSS-REFERENCE TO RELATED APPLICATIONS AND PRIORITY

The present application claims priority to Indian application no. 202421032922, filed on April 25, 2024.

TECHNICAL FIELD

The disclosure herein generally relates to the field of posture estimation, and more specifically to methods and systems for real time video driven human 3-dimensional (3-D) posture estimation during physical activities.

BACKGROUND

The health benefits of a subject, i.e., humans from proper physical activities such as exercises for example, gym and yoga, are enormous. While doing such exercises maintaining proper body posture of a subject is indispensable. However neglecting body posture can result in various disorders such as back pain, spinal dysfunction, joint or muscle degeneration. Researchers have found that chronic poor posture is a leading cause of musculoskeletal disorder and spinal injury. Generally, a trainer monitors the body postures of the exercising trainees. With the advancement of Machine Learning (ML) and Deep Learning (DL) technology, especially Generative Artificial Intelligence (GenAI), 3-dimensional (3-D) body posture monitoring is automated using personal mobile devices such as smart phones.

Estimating 3-D posture from 2 dimensional (2-D) images is not straight forward. Conventional Computer Vision (CV) based 3-D posture monitoring techniques and stereovision-based techniques require a depth sensor along with RGB camera, where multiple cameras are required which can also estimate the depth. Recent works have focused on recovering the entire 3-D shape including postures in parametric form such as skinned multi-person linear (SMPL) models which utilize heat maps or spectral domains. However, these parametric forms are less accurate for posture estimation compared to skeleton based approaches and more over require more memory and processing power due to more parameter size. There are techniques that estimate 3-D posture of the human from a static image, since, these techniques do not exploit temporal information, they do not give smooth transition of postures over time. Furthermore, the techniques that exploit the temporal information suffer from higher time requirements due to two state computations.

In previous work, Pavllo et al, 2019 ("3D Human Pose Estimation in Video With Temporal Convolutions and Semi-Supervised Training", CVPR, 15 June 2019, pages 7745-7754), estimated 3D poses in video with a fully convolutional model based on dilated temporal convolutions over 2D keypoints. Kocabas et al, 2020 ("VIBE: Video Inference for Human Body Pose and Shape Estimation", CVPR, 13 June 2020, pages 5252-5262), proposed an adversarial learning framework that discriminate between real human motions and those produced by temporal pose and shape regression networks to produce kinematically plausible motion sequences without in-the-wild ground-truth 3D labels. Theodoris et al, 2020 ("Cross-modal Variational Alignment of Latent Spaces", 2020, CVPRW, 14 June 2020, pages 4127-4136) assessed the quality of rehabilitation exercises by extracting sequences of skeletal body joints from consecutive RGB video frames and analysing them with many-to-one sequential neural networks.

SUMMARY

Embodiments of the present disclosure present technological improvements as solutions to one or more of the above-mentioned technical problems recognized by the inventors in conventional systems.

In an aspect, a processor-implemented method for real time video driven human 3-dimensional (3-D) posture estimation is provided. The method including the steps of: receiving one or more training datasets each comprising a plurality of training videos, wherein each of the plurality of training videos comprises one or more training video clips, wherein each of the one or more training video clips comprises a plurality of training video frames and a 3-D posture annotated to each of the plurality of training video frames; training a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially, and wherein training the autoencoder network with the one or more training datasets comprises: (a) passing 3-D postures annotated to the plurality of training video frames present in each training video clip at a time, of the one or more training video clips present in each of the one or more training datasets, to the first encoder, to obtain a latent space vector associated to the 3-D postures associated to each training video clip; (b) passing the latent space vector associated to the 3-D postures associated to each training video clip, to the first decoder, to obtain reconstructed 3-D postures of the associated training video clip; (c) calculating a value of a loss function of the autoencoder network, using (i) the 3-D postures of each training video clip and (ii) the reconstructed 3-D postures of the associated training video clip, wherein the loss function of the autoencoder network is a summation of an autoencoder reconstruction loss and a bone length consistency loss; (d) updating one or more autoencoder network parameters of the autoencoder network based on the value of the loss function of the autoencoder network; and (e) repeating the steps (a) through (d) until the value of the loss function of the autoencoder network is less than a first predefined threshold value, to obtain a trained autoencoder network; and training the second encoder with the one or more training datasets comprises: (f) passing the 3-D postures annotated to each training video clip at a time, of the one or more training video clips present in each of the one or more training datasets, to the first encoder of the trained autoencoder network, to obtain a first latent space vector of the associated training video clip; (g) passing the plurality of training video frames present in the associated training video clip, to the second encoder, to obtain a second latent space vector of the associated training video clip; (h) calculating a value of the loss function of the second encoder, using (i) the first latent space vector of the associated training video clip and (ii) the second latent space vector of the associated training video clip, wherein the loss function of the second encoder is an encoder reconstruction loss; (i) updating one or more second encoder network parameters of the second encoder based on the value of the loss function of the second encoder; and (j) repeating the steps (f) through (i) until the value of the loss function of the second encoder is less than a second predefined threshold value, to obtain a trained second encoder; receiving in real-time a test video of the human while performing a physical activity, through an acquisition device; dividing the test video into one or more test video clips based on presence of the human in the associated one or more test video clips, using a human detection technique; passing each of the one or more test video clips to the trained second encoder of the trained neural network model, to obtain a latent space vector for each of the one or more test video clips; and passing the latent space vector of each of the one or more test video clips, to the first decoder of the trained autoencoder network of the trained neural network model, to estimate the 3-D posture of the human present in each of the one or more test video clips.

In another aspect, a system for real time video driven human 3-dimensional (3-D) posture estimation is provided. The system includes: a memory storing instructions; one or more Input/Output (I/O) interfaces; and one or more hardware processors coupled to the memory via the one or more I/O interfaces, wherein the one or more hardware processors are configured by the instructions to: receive one or more training datasets each comprising a plurality of training videos, wherein each of the plurality of training videos comprises one or more training video clips, wherein each of the one or more training video clips comprises a plurality of training video frames and a 3-D posture annotated to each of the plurality of training video frames; train a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially, and wherein training the autoencoder network with the one or more training datasets comprises: (a) passing 3-D postures annotated to the plurality of training video frames present in each training video clip at a time, of the one or more training video clips present in each of the one or more training datasets, to the first encoder, to obtain a latent space vector associated to the 3-D postures associated to each training video clip; (b) passing the latent space vector associated to the 3-D postures associated to each training video clip, to the first decoder, to obtain reconstructed 3-D postures of the associated training video clip; (c) calculating a value of a loss function of the autoencoder network, using (i) the 3-D postures of each training video clip and (ii) the reconstructed 3-D postures of the associated training video clip, wherein the loss function of the autoencoder network is a summation of an autoencoder reconstruction loss and a bone length consistency loss; (d) updating one or more autoencoder network parameters of the autoencoder network based on the value of the loss function of the autoencoder network; and (e) repeating the steps (a) through (d) until the value of the loss function of the autoencoder network is less than a first predefined threshold value, to obtain a trained autoencoder network; and training the second encoder with the one or more training datasets comprises: (f) passing the 3-D postures annotated to each training video clip at a time, of the one or more training video clips present in each of the one or more training datasets, to the first encoder of the trained autoencoder network, to obtain a first latent space vector of the associated training video clip; (g) passing the plurality of training video frames present in the associated training video clip, to the second encoder, to obtain a second latent space vector of the associated training video clip; (h) calculating a value of the loss function of the second encoder, using (i) the first latent space vector of the associated training video clip and (ii) the second latent space vector of the associated training video clip, wherein the loss function of the second encoder is an encoder reconstruction loss; (i) updating one or more second encoder network parameters of the second encoder based on the value of the loss function of the second encoder; and (j) repeating the steps (f) through (i) until the value of the loss function of the second encoder is less than a second predefined threshold value, to obtain a trained second encoder; receive in real-time a test video of the human while performing a physical activity, through an acquisition device; divide the test video into one or more test video clips based on presence of the human in the associated one or more test video clips, using a human detection technique; pass each of the one or more test video clips to the trained second encoder of the trained neural network model, to obtain a latent space vector for each of the one or more test video clips; and pass the latent space vector of each of the one or more test video clips, to the first decoder of the trained autoencoder network of the trained neural network model, to estimate the 3-D posture of the human present in each of the one or more test video clips.

In yet another aspect, there are provided one or more non-transitory machine-readable information storage mediums comprising one or more instructions which when executed by one or more hardware processors cause: receiving one or more training datasets each comprising a plurality of training videos, wherein each of the plurality of training videos comprises one or more training video clips, wherein each of the one or more training video clips comprises a plurality of training video frames and a 3-D posture annotated to each of the plurality of training video frames; training a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially, and wherein training the autoencoder network with the one or more training datasets comprises: (a) passing 3-D postures annotated to the plurality of training video frames present in each training video clip at a time, of the one or more training video clips present in each of the one or more training datasets, to the first encoder, to obtain a latent space vector associated to the 3-D postures associated to each training video clip; (b) passing the latent space vector associated to the 3-D postures associated to each training video clip, to the first decoder, to obtain reconstructed 3-D postures of the associated training video clip; (c) calculating a value of a loss function of the autoencoder network, using (i) the 3-D postures of each training video clip and (ii) the reconstructed 3-D postures of the associated training video clip, wherein the loss function of the autoencoder network is a summation of an autoencoder reconstruction loss and a bone length consistency loss; (d) updating one or more autoencoder network parameters of the autoencoder network based on the value of the loss function of the autoencoder network; and (e) repeating the steps (a) through (d) until the value of the loss function of the autoencoder network is less than a first predefined threshold value, to obtain a trained autoencoder network; and training the second encoder with the one or more training datasets comprises: (f) passing the 3-D postures annotated to each training video clip at a time, of the one or more training video clips present in each of the one or more training datasets, to the first encoder of the trained autoencoder network, to obtain a first latent space vector of the associated training video clip; (g) passing the plurality of training video frames present in the associated training video clip, to the second encoder, to obtain a second latent space vector of the associated training video clip; (h) calculating a value of the loss function of the second encoder, using (i) the first latent space vector of the associated training video clip and (ii) the second latent space vector of the associated training video clip, wherein the loss function of the second encoder is an encoder reconstruction loss; (i) updating one or more second encoder network parameters of the second encoder based on the value of the loss function of the second encoder; and (j) repeating the steps (f) through (i) until the value of the loss function of the second encoder is less than a second predefined threshold value, to obtain a trained second encoder; receiving in real-time a test video of the human while performing a physical activity, through an acquisition device; dividing the test video into one or more test video clips based on presence of the human in the associated one or more test video clips, using a human detection technique; passing each of the one or more test video clips to the trained second encoder of the trained neural network model, to obtain a latent space vector for each of the one or more test video clips; and passing the latent space vector of each of the one or more test video clips, to the first decoder of the trained autoencoder network of the trained neural network model, to estimate the 3-D posture of the human present in each of the one or more test video clips.

In an embodiment, each of (i) the first encoder of the autoencoder network, (ii) the first decoder of the autoencoder network, and (iii) the second encoder, comprises four residual network (ResNet) style blocks surrounded by one or more associated skip connections.

In an embodiment, each block of the four ResNet style blocks present in the first encoder of the autoencoder network and the second encoder, comprises two convolution layers each followed by a batch normalization layer, a rectified linear unit (ReLU) activation function layer, and a dropout layer.

In an embodiment, each block of the four ResNet style blocks present in the first decoder comprises two deconvolution layers each followed by a batch normalization layer, a rectified linear unit (ReLU) activation function layer, and a dropout layer.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for real time video driven human 3-dimensional (3-D) posture estimation, in accordance with some embodiments of the present disclosure.

FIGS. 2A-2C illustrate exemplary flow diagrams of a processor-implemented method for real time video driven human 3-dimensional (3-D) posture estimation, using the system of FIG. 1, in accordance with some embodiments of the present disclosure.

FIG. 3 shows an architecture of the neural network model, in accordance with some embodiments of the present disclosure.

FIG. 4 shows an architecture of one ResNet type block with a skip connection, in accordance with some embodiments of the present disclosure.

FIG. 5 shows an exemplary setup for online posture analysis using the mobile device, in accordance with some embodiments of the present disclosure.

FIG. 6 shows the predicted 3-D postures of the human at several difficult conditions, by the trained neural network model of the present disclosure.

FIG. 7 shows a performance comparison of the present disclosure with that of MediaPipe in human posture estimation.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Chronic poor posture during physical activities such as exercises is a leading cause of musculoskeletal disorder and spinal injury. Generally, a trainer monitors the body postures of the exercising trainees. With the advancement of Machine Learning (ML) and Deep Learning (DL) technology, especially Generative Artificial Intelligence (GenAI), 3-dimensional (3-D) body posture monitoring is automated using personal mobile devices such as smart phones. The automation should make proper posture monitoring easily reachable to normal people who otherwise may not be able to afford a trainer. A good and realistic automated system should have the following characteristics: (i) non-interfere with the user (s)' normal activities, (ii) minimal requirements in terms of sensors and other resources thus, cost effective, (iii) error in practically tolerable range, and (iv) real time estimation. For estimating 3-D human posture, most conventional techniques need either a 3-D depth sensor which is expensive or multiple cameras for stereovision. Hence, a low-cost system for automated monitoring and analysis of posture is the need of the day.

The present disclosure solves the technical problems in the art with the methods and systems for real time video driven human 3-D posture estimation during physical activities. The present invention discloses a smart-phone camera based automatic posture monitoring system designed with an auto-encoder based architecture. The disclosed auto-encoder based cross-modal method uses monocular video (2-D image sequences) from a single low-end mobile device (for example, smart-phone camera) for estimating human 3-D posture in real time (~ 5 fps) with high accuracy (less than 1 cm error per joint location).

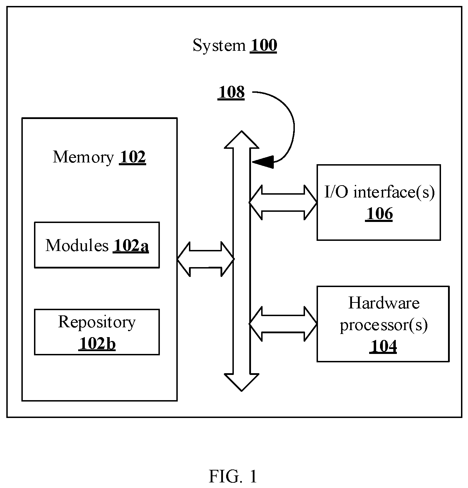

Referring now to the drawings, and more particularly to FIG. 1 through FIG. 7, where similar reference characters denote corresponding features consistently throughout the figures, there are shown preferred embodiments, and these embodiments are described in the context of the following exemplary systems and/or methods.

FIG. 1 is an exemplary block diagram of a system 100 for real time video driven human 3-dimensional (3-D) posture estimation, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random-access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external databases may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

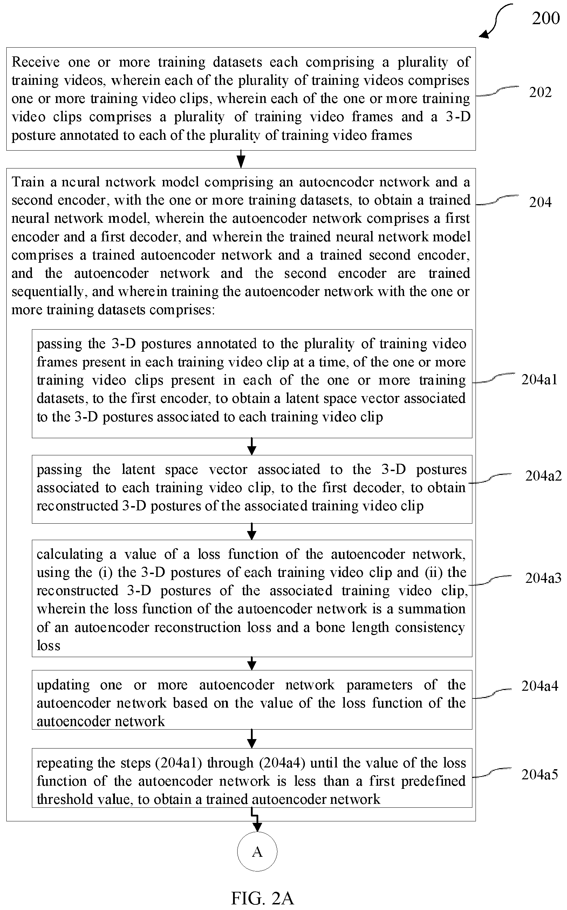

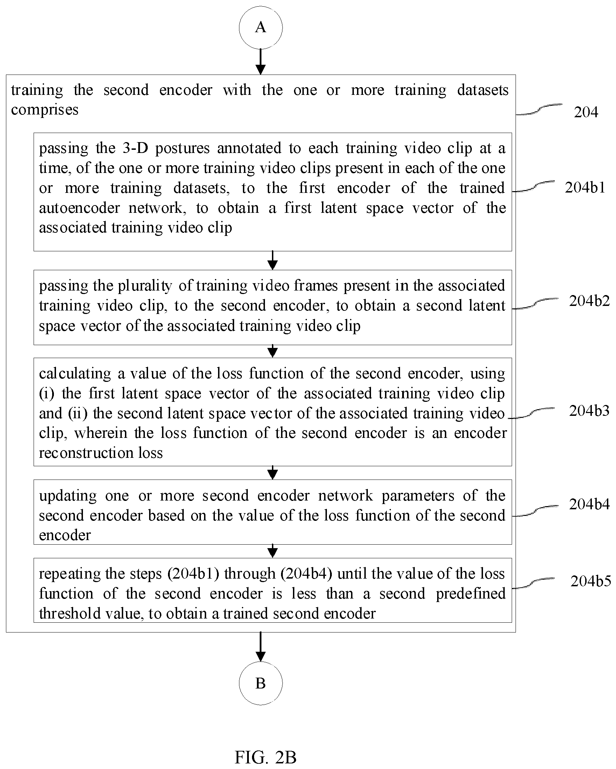

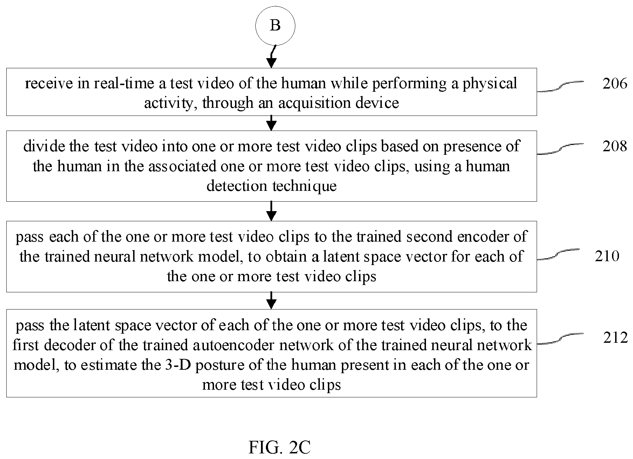

Referring to FIGS. 2A-2C, components and functionalities of the system 100 are described in accordance with an example embodiment of the present disclosure. For example, FIGS. 2A-2C illustrate exemplary flow diagrams of a processor-implemented method 200 for real time video driven human 3-dimensional (3-D) posture estimation, using the system 100 of FIG. 1, in accordance with some embodiments of the present disclosure. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of method 200, the one or more hardware processors 104 of the system 100 are configured to receive one or more training datasets. Each training dataset of the one or more training datasets includes a plurality of training videos. Each training video of the plurality of training videos includes one or more training video clips. Further each of the one or more training video clips includes a plurality of training video frames and a 3-D posture annotated to each of the plurality of training video frames.

In an embodiment, the number of the one or more training video clips present in each training video may be fixed or may vary based on the length of each training video. However, the number of the plurality of training video frames present in each training video clip is fixed. Each training video frame is a 2-dimensional image and represents the presence of the human performing the physical activity in a certain position and a corresponding 3-D posture is annotated to each training video frame.

There is a need to map a training image/training video frame displaying a human to the corresponding 3-D posture(s) of the human. To do so, a mathematical representation of human 3-D posture is required. A widely accepted way is a skeleton graph $G$ consisting of a certain number of body joint locations $x = \{x_i, i = 1, ..., n\}$ and bones $b = \{b_j, j = 1, ... , m\}$ connecting the joints. Rather than mapping the images directly to the 3-D joint locations, it is easier to map the images to a latent space. This space acts like an interpreter between the image space and the 3-D posture space. This latent space feature (i) will be independent of any information present in the image (such a gender/identity/emotion of the human) other than 3-D human posture, thus, not contaminating the result with unnecessary information, (ii) will learn the relationship of the 3-D posture (alternatively called as pose) at one instance in time to 3-D postures in preceding and next time instances and (iii) will be concise.

At step 204 of method 200, the one or more hardware processors 104 of the system 100 are configured to train a neural network model with the one or more training datasets received at step 202 of the method 200, to obtain a trained neural network model. The neural network model of the present disclosure includes an autoencoder (AE) network and a second encoder (E). The autoencoder (AE) network includes a first encoder and a first decoder.

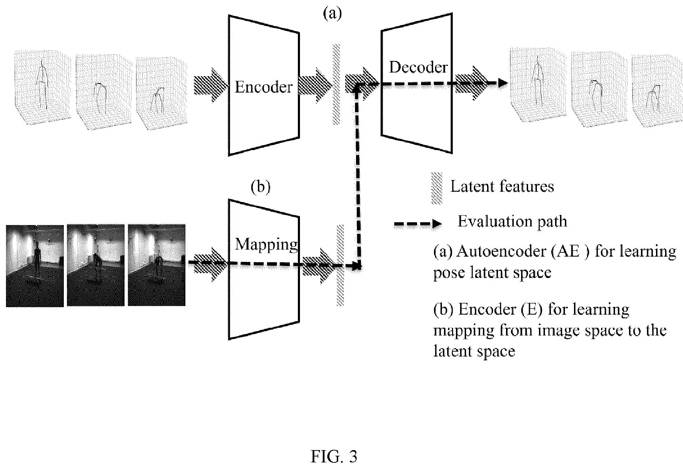

FIG. 3 shows an architecture of the neural network model, in accordance with some embodiments of the present disclosure. The input to the AE network is a sequence of 3-D postures. The objective of the AE network is to learn posture latent posture of each 3-D posture. The encoder (E) maps a given video clip of image sequence (the plurality of training video frames in each training video clip), displaying human in it, to the corresponding latent feature vector (learnt by the AE network). Before training the AE network and the E, an Off-the-Shelf (OS) routine Detectron is utilized for detecting the human in the training video frames (images) of the training video clip. Once this routine detects a human, it sends the cropped human image to the E. Also, the corresponding 3-D postures are sent to the AE network for the training.

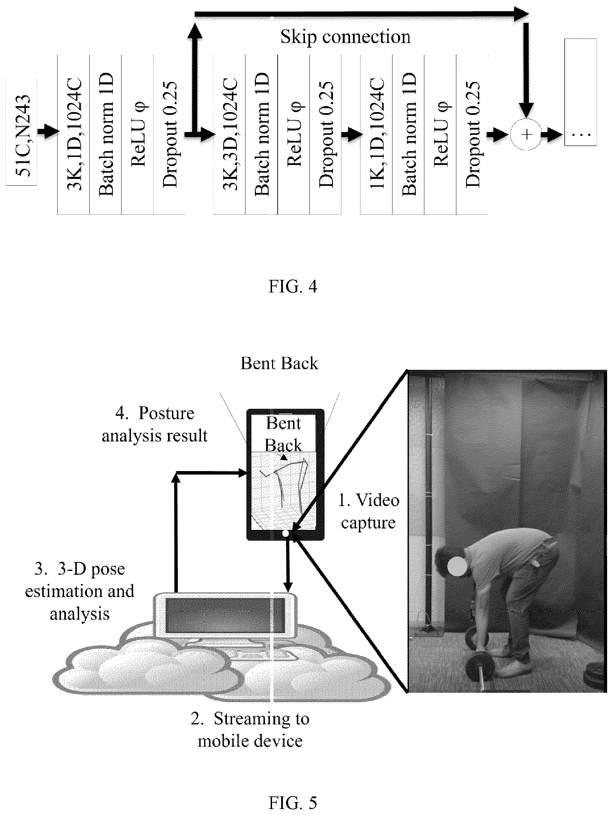

Each of (i) the first encoder of the autoencoder (AE) network, (ii) the first decoder of the autoencoder (AE) network, and (iii) the second encoder (E), comprises four residual network (ResNet) style blocks surrounded by one or more associated skip connections. FIG. 4 shows an architecture of one ResNet type block with a skip connection, in accordance with some embodiments of the present disclosure. Each block of the four ResNet style blocks present in the first encoder of the autoencoder (AE) network and the second encoder, includes two convolution layers each followed by a batch normalization layer, a rectified linear unit (ReLU) activation function layer, and a dropout layer. Similarly, each block of the four ResNet style blocks present in the first decoder of the autoencoder (AE) network comprises two deconvolution layers each followed by the batch normalization layer, the rectified linear unit (ReLU) activation function layer, and the dropout layer.

As described above, the input to the AE network is the sequence of 3-D postures. The concatenated 3-D joint locations for $n$ = 17 joints form $3 \times 17$ = 51 channels and there are $N$ = 243 (from $N$ frames/postures) number of input features in the temporal dimension for each channel. Temporal 1-D convolution is applied with kernel size $K$ and dilation factor $D$ and $C$ output channels. Then $B$ = 4 number of ResNet style blocks are applied which are surrounded by the skip connections.

In the ResNet style block, a dropout of 0.25 is applied. The kernel size $K$ and the dilation factor $D$ of the first convolution is 3 and $K^B$ respectively. For the second convolution for each block $K$ = 1 and $D$ = 1. This strategy has several advantages. The first advantage is that the 1-D convolutional kernel with dilation factor $D$ will have $D$ - 1 zeros between two consecutive kernel elements. This sparse structure increases the receptive field size which in turn ensures processing more information in a smaller number of operations. This makes the neural network model of the present disclosure faster.

The second advantage is that the 1-D convolution over 3-D coordinates drastically brings down the number of network parameters thus, the required resources. For example, if spectral map of size for example, $150 \times 150$ is considered, then the number of input nodes becomes 22,500 per map, whereas, in our case the size is $17 \times 3 \times 243$ = 12,393 for $17 \times 3$ = 51 input maps. The third advantage is 1-D convolution over the temporal domain. Thus, the depth of the network is always fixed and not dependent on the size of the input video sequence. LSTM and RNN are generally used for processing sequences are dependent on the size of the sequence, therefore, suffer from vanishing gradient, whereas the method of the present disclosure does not.

The input to the second encoder (E) is the plurality of training video frames present in each of the one or more training video clips of each of the plurality of training videos in each of the one or more training datasets.

The autoencoder (AE) network and the second encoder (E) are trained sequentially, i.e., the autoencoder (AE) network is trained first followed by the training of the second encoder (E). For training the autoencoder (AE) network, a reconstruction loss along with bone length consistency loss are employed. For training the second encoder (E), only the reconstruction loss is employed.

The training of the autoencoder (AE) network with the one or more training datasets is further explained through steps 204a1 through 204a5. At step 204a1, the 3-D postures annotated to the plurality of training video frames present in each training video clip are passed at a time (at each iteration and the number of the 3-D postures being the batch size), to the first encoder to obtain a latent space vector associated to the 3-D postures associated to the corresponding training video clip. At step 204a2, the latent space vector obtained at the step 204a1 of the associated to the 3-D postures associated to the corresponding training video clip are passed to the first decoder to obtain the reconstructed 3-D postures of the associated training video clip.

At step 204a3, a value of a loss function of the autoencoder (AE) network, is calculated using (i) the 3-D postures of each training video clip passed at step 204a1 and (ii) the reconstructed 3-D postures of the associated training video clip obtained at step 204a2. The loss function of the autoencoder (AE) network is a summation of an autoencoder reconstruction loss and a bone length consistency loss. The loss function ($L_{AE}$) of the autoencoder (AE) network is mathematically represented as equation 1:

$$L_{AE} = \frac{1}{(N \times n)} \sum_{i=1}^{N} \sum_{j=1}^{n} \left\| x_{i,j}, AE(x_{i,j}) \right\|_2 + \frac{1}{(N-1) \times m} \sum_{i=2}^{N-1} \sum_{k=1}^{m} \left\| b_{i,k} - b_{i-1,k} \right\|_2 \quad (1)$$

The first part of equation 1 represents the autoencoder reconstruction loss and the second part of the equation 1 represents the bone length consistency loss. In equation 1, $N$ is the number of 3-D postures (images) annotated to the plurality of training video frames considered for each training video clip, n is the number of joints of the 3-D postures (of the human in each 3-D posture), m is the number of bones of the 3-D postures (of the human in each 3-D posture), and $AE_L(x)$ is the latent space vector obtained at step 204a1 when the 3-D posture sequence (corresponding to the training video clip) is forwarded through the first encoder of the autoencoder (AE) network.

At step 204a4, one or more autoencoder network parameters of the autoencoder (AE) network are updated based on the value of the loss function of the autoencoder (AE) network obtained at step 204a3 through back propagation.

At step 204a5, the steps (204a1) through (204a4) are repeated until the value of the loss function of the autoencoder (AE) network obtained at the current iteration is less than a first predefined threshold value, to obtain a trained autoencoder network.

The training of the second encoder (E) with the one or more training datasets is further explained through steps 204b1 through 204b5. At step 204b1, the 3-D postures annotated to each training video clip are passed at a time (at each iteration and the number of the 3-D postures being the batch size), to the first encoder of the trained autoencoder network obtained at step 204a5, to obtain a first latent space vector of the associated training video clip. At step 204b2, the plurality of training video frames present in the associated training video clip (which is passed at step 204b 1), are passed to the second encoder (E), to obtain a second latent space vector of the associated training video clip.

At step 204b3, a value of the loss function of the second encoder (E) is calculated using (i) the first latent space vector of the associated training video clip obtained at step 204b1 and (ii) the second latent space vector of the associated training video clip obtained at step 204b2. The loss function of the second encoder (E) is an encoder reconstruction loss. The loss function ($L_E$) of the second encoder (E) is mathematically represented as equation 2:

$$L_E = \frac{1}{N \times l} \|AE_L(x), E(I)\|_2 \qquad\qquad (2)$$

In equation 2, $N$ is the number of 3-D postures (images) annotated to the plurality of training video frames considered for each training video clip passed at step 204b1, $l$ is the size of the second latent space vector obtained at step 204b2, $AE_L(x)$ is the first latent space vector obtained at step 204b1 when the 3-D posture sequence (corresponding to the training video clip) is forwarded through the first encoder of the trained autoencoder (AE) network, and E(I) represents the output of second encoder (E) for the central training video frame I (the video frame (image) at the central position) of the corresponding training video clip.

At step 204b4, one or more second encoder network parameters of the second encoder (E) are updated based on the value of the loss function of the second encoder (E) obtained at step 204b3 through the back propagation.

At step 204a5, the steps (204b1) through (204b4) are repeated until the value of the loss function of the second encoder (E) obtained at the current iteration is less than a second predefined threshold value, to obtain a trained second encoder. Once the autoencoder (AE) network and the second encoder (E) are trained, the trained neural network model comprising the trained autoencoder network and the trained second encoder is obtained.

Once the trained neural network model is obtained, a test video is passed through the human detector to the trained second encoder. The output of the trained second encoder (the latent space vector) is passed as an input to the first decoder of the trained autoencoder network. The first decoder of the trained autoencoder network predicts the 3-D posture corresponding to the human in the input test video frame (image) of the test video. The evaluation path is shown in FIG. 3 for predicting the 3-D posture. The details are further explained through steps 206 to 212 of the method 200.

At step 206 of method 200, the one or more hardware processors 104 of the system 100 are configured to receive a test video of the human whose posture is to be monitored while performing the physical activity. The test video may be received through the vision acquisition device installed in the mobile device such as the smart phone. The test video is the monocular video or a sequence of RGB frames without depth information.

At step 208 of method 200, the one or more hardware processors 104 of the system 100 are configured to divide the test video received at step 206 of the method 200 into one or more test video clips based on presence of the human in the associated one or more test video clips. A human detection technique uses the human detector such as the Off-the-Shelf (OS) routine Detectron to detect the human present in each video frame of the test video. Each of the one or more test video clips contains a plurality of such test video frames. The number of the plurality of the test video frames is same as that of the number of the plurality of training video frames present in each training video clip used during the training.

At step 210 of method 200, the one or more hardware processors 104 of the system 100 are configured to pass each of the one or more test video clips to the trained second encoder of the trained neural network model, to obtain the latent space vector for each of the one or more test video clips. The latent space vector is obtained for each test video clip.

At step 212 of method 200, the one or more hardware processors 104 of the system 100 are configured to pass the latent space vector of each of the one or more test video clips obtained at step 210 of the method 200, to the first decoder of the trained autoencoder network of the trained neural network model, to estimate the 3-D posture of the human present in each of the one or more test video clips. The 3-D posture of the human is estimated for each test video clip based on the centred video frame. The 3-D posture contain 3-D coordinates of each of the 17 joints, the way the neural network model is trained at step 204 of the method 200.

The present disclosure eliminated the need of both depth sensors and stereovision based specialized cameras for estimating the 3-D posture of the human. The methods and systems of the present disclosure accurately estimate the 3-D posture from the single monocular video from the low-resolution camera e.g., a smart-phone camera. The present disclosure utilizes 1-D dilation-based convolution directly on the temporal sequence of 3D pose coordinates instead of the heat map or spectral domain. This reduces the parameter size of our model and makes it less resource consuming. Further, the present disclosure exploits the temporal information. and brings down the time consumption by employing a single stage Deep Learning (DL) based network that predicts 3-D posture from image sequence directly.

FIG. 5 shows an exemplary setup for online posture analysis using the mobile device, in accordance with some embodiments of the present disclosure. As shown in FIG. 5, a monocular/RGB camera present in the mobile device such as a smart phone is fixed before the human in the video mode. The human or the user can perform physical activities. The obtained monocular video or the sequence of RGB frames from the monocular/RGB camera stream gets channeled to the cloud and is processed by the methods configured in the systems such as the mobile device. The posture analytics output gets displayed on the screen. The first part of the process is detecting the posture itself. The second part is to detect if the posture is correct or not so that necessary precautions can be taken to correct the postures and avoid body disorders such as back pain, spinal dysfunction, joint or muscle degeneration.

Example scenario:

Dataset Description: The neural network model of the present disclosure is trained on videos from eight subjects performing 47 exercises, being captured at 50 fps from four different views using two different camera models, one assuming image distortion and the other ignoring it. For testing, two different types of data were considered having: (i) online yoga videos and (ii) an in-house dataset captured in-the-wild where six volunteers have performed two exercises each, three takes per exercise and videos captured from two different views (frontal and side) per capture. This resulted in a total of 72 videos. The videos are of variable length. The in-house data collection protocol was cleared by the internal Ethics Committee. The Helsinki Human Research guidelines were followed for the data capture. For training the neural network model, the videos are divided into clips of $N$ = 243 video frames with random sampling.

A two-step evaluation of the present disclosure was performed. The first step evaluates the proposed neural network model architecture in predicting the 3-D posture (pose) given the video. The second step evaluates the utilization of these 3-D postures for analyzing if proper posture for a given exercise is maintained.

Results on 3-D posture estimation from videos: The methods and systems of the present disclosure were evaluated, and a comparative study was conducted with the state-of-the art (SOA) techniques both qualitatively and quantitatively.

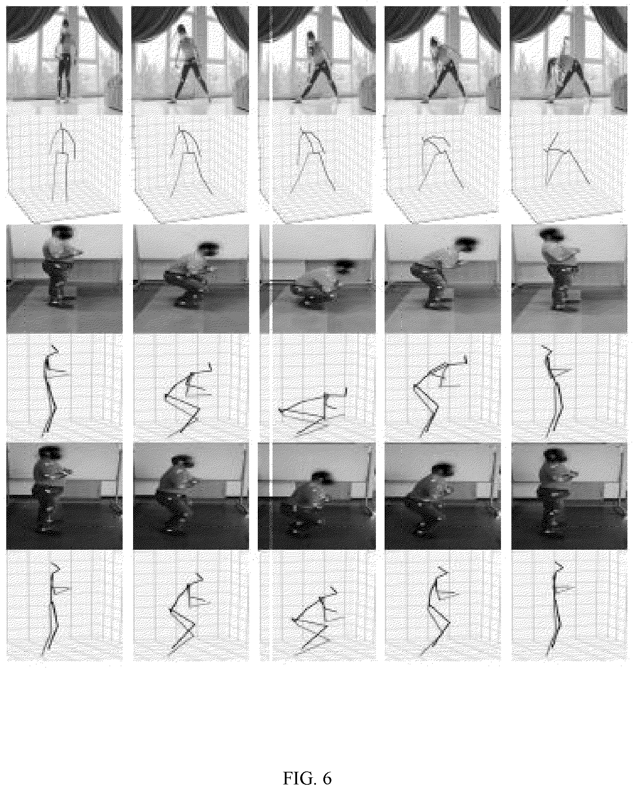

Comparative study on qualitative results: The trained neural network model of the present disclosure was tested on several difficult conditions, such as (i) low light, (ii) low resolution, (iii) self-occlusion, and (iv) highly flexible human body posture such as in yoga. FIG. 6 shows the predicted 3-D postures of the human at several difficult conditions, by the trained neural network model of the present disclosure. As shown in FIG. 6, the present disclosure produces good results in all these difficult and practical conditions. In FIG. 6, the first and second row shows a highly flexible body, low resolution (240p) and front view. In the third and fourth rows, bad posture (bent in the back, the angle at knee being less than 60 degrees in second and third columns), self-occlusion (left body part being occluded by right). In the fifth and sixth row, low light condition, side view, good posture for squat (straight back, angle at knee being greater than 60 degrees). The first row of each block shows input image with the joint locations projected on to the image, the second row shows the 3-D joint locations/skeletons as estimated by the trained neural network of the present disclosure.

Further, the performance of the trained neural network of the present disclosure was compared with the newest and most relevant SOA work called MediaPipe. The methods and systems of the present disclosure have several practical advantages over MediaPipe. They are:

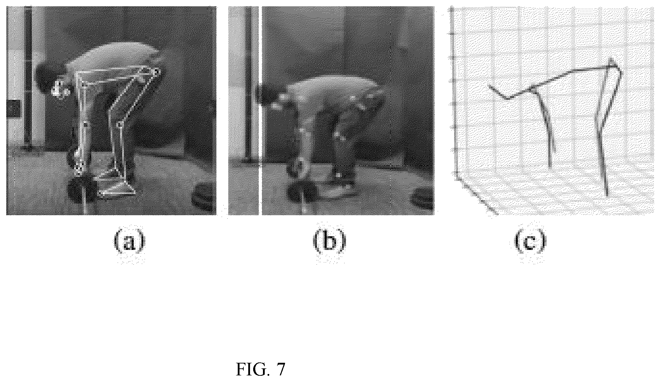

(i) The 33 joint locations that MediaPipe trains on, does not consider any joint on the body torso. The present disclosure considers three joints on body torso. Thus, the present disclosure is able to capture the straightness vs. bend of the body torso which MediaPipe cannot. FIG. 7 shows a performance comparison of the present disclosure with that of MediaPipe. This straightness of the body torso is an important posture requirement for most exercises. In FIG. 7, (a) is the output of MediaPipe, contains no joint on the back, cannot detect the bent back: a bad posture for the exercise Deadlift. (b) is the output of the present disclosure. (c) is the skeletal output of the present disclosure, contains three joints on the back, thus detects the bent displayed by a curved line on the back.

(ii) (ii) MediaPipe processes one image at a time. It does not exploit the temporal relationship of the 3-D body postures. As a result, MediaPipe cannot produce smooth transition of skeletal postures over temporal axis. The present disclosure explicitly exploits the temporal relationship via 1-D convolution over time axis. Thus, the present disclosure produces realistic and smooth transition. To quantify this smoothness. The Mean Per Joint Velocity Error (MPJVE) corresponding to the first derivative of the 3-D posture sequence was measured. The MPJVE of the present disclosure is 2.8 vs. 11.6 for MediaPipe.

Comparative Study on Quantitative Results: The Mean Per Joint Position Error (MPJPE) defined by equation 3 was measured and compared with the other SOA techniques such as (A) exploiting temporal information from 3-D posture estimation, (B) Human posture estimation using MediaPipe pose based on humanoid model, and (C) 2-D/3-D pose estimation and action recognition using multitask deep learning.

$$MPJPE = 1/(F \times n) \sum_{i=1}^{F} \sum_{j=1}^{n} \left\| x_{ij}, M(I_i)_j \right\|_2 \qquad (3)$$

In equation 3, F is the number of frames and $M(I_i)_j$ represents the jth joint of the 3-D posture output of the proposed model for the ith image. Table 1 shows the comparison results of the present disclosure over the SOA techniques A, B and C. As shown in Table 1, the present disclosure results in less error as compared to other SOA techniques. In addition, the present disclosure is a one-step method in the inference case whereas B consists of two steps, image to 2-D posture detection and 2-D to 3-D posture prediction. Thus, our method is less time-consuming during inference (~ 2 - 3 fps vs. ~ 5 fps). In Table 1, Sq: Squat, DL: Deadlift, FV: Front View, SV: Side View.

Table 1

| Method | | Exercise | | | Avg |
|---|---|---|---|---|---|
| | *Sq FV* | *Sq SV* | *DL FV* | *DL SV* | |
| A | NA | NA | NA | NA | 58.3 |
| B | 46 | 47.5 | 46.2 | 47.5 | 46.8 |
| C | NA | NA | NA | NA | 53.2 |
| Present disclosure | 45 | 44 | 45.8 | 46.1 | 45.2 |

Results on Posture Analysis: The efficacy of the present disclosure was evaluated for detecting whether the user is maintaining the proper posture while doing a particular exercise. For this, two exercises were considered: (i) squat (done by people in general for toning legs and glute muscles) and (ii) deadlift (done by advance gym trainees and involves lifting heavy weights for bodybuilding). Exercises follow a fixed sequence of body postures. For getting these body posture rules, certified gym trainer consultation was made. For squat, the rules are: 1. the angle at knee should be more than 60 degrees, 2. the back should be straight (no bend). The body posture rules for deadlift are: 1. the weight should not be far away from the body, 2. the back should be straight, 2. the upper body should not go backward. These conditions are easily detected by the 3-D joint locations of the body. In FIG. 6, third vs. fifth rows show violation of the two rules vs. maintaining of the rules for squat. FIG. 7 shows that a bent back is detected by the present disclosure for deadlift.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of real time video driven human 3-D posture estimation during physical activities. The present invention discloses a smart-phone camera based automatic posture monitoring system designed with an auto-encoder based architecture. The disclosed auto-encoder based cross-modal method uses monocular video (2-D image sequences) from a single low-end mobile device (for example, smart-phone camera) for estimating human 3-D posture in real time (~ 5 fps) with high accuracy (less than 1 cm error per joint location).

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.  A processor-implemented method (200), comprising:

    receiving, via one or more input/output (I/O) interfaces, one or more training datasets each comprising a plurality of training videos, wherein each of the plurality of training videos comprises one or more training video clips, wherein each of the one or more training video clips comprises a plurality of training video frames and a 3-Dimensional (3-D) posture annotated to each of the plurality of training video frames (202); and
    training, via one or more hardware processors, a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially (204), and wherein:

    training the autoencoder network with the one or more training datasets comprises:

    (a) passing 3-D postures annotated to the plurality of training video frames present in each training video clip at a time, of the one or more training video clips present in each of the one or more training datasets, to the first encoder, to obtain a latent space vector associated to the 3-D postures associated to each training video clip (204a1);
    (b) passing the latent space vector associated to the 3-D postures associated to each training video clip, to the first decoder, to obtain reconstructed 3-D postures of the associated training video clip (204a2);
    (c) calculating a value of a loss function of the autoencoder network, using (i) the 3-D postures of each training video clip and (ii) the reconstructed 3-D postures of the associated training video clip, wherein the loss function of the autoencoder network is a summation of an autoencoder reconstruction loss and a bone length consistency loss (204a3);

(d) updating one or more autoencoder network parameters of the autoencoder network based on the value of the loss function of the autoencoder network (204a4); and

(e) repeating the steps (a) through (d) until the value of the loss function of the autoencoder network is less than a first predefined threshold value, to obtain a trained autoencoder network (204a5); and

**characterised by**, training the second encoder with the one or more training datasets comprises:

(f) passing the 3-D postures annotated to each training video clip at a time, of the one or more training video clips present in each of the one or more training datasets, to the first encoder of the trained autoencoder network, to obtain a first latent space vector of the associated training video clip (204b 1);

(g) passing the plurality of training video frames present in the associated training video clip, to the second encoder, to obtain a second latent space vector of the associated training video clip (204b2);

(h) calculating a value of the loss function of the second encoder, using (i) the first latent space vector of the associated training video clip and (ii) the second latent space vector of the associated training video clip, wherein the loss function of the second encoder is an encoder reconstruction loss (204b3);

(i) updating one or more second encoder network parameters of the second encoder based on the value of the loss function of the second encoder (204b4); and

(j) repeating the steps (f) through (i) until the value of the loss function of the second encoder is less than a second predefined threshold value, to obtain a trained second encoder (204b5).

2. The method (200) as claimed in claim 1, further comprising:

receiving in real-time, via the one or more input/output (I/O) interfaces, a test video of the human while performing a physical activity, through an acquisition device (206);

dividing, via the one or more hardware processors, the test video into one or more test video clips based on presence of the human in the associated one or more test video clips, using a human detection technique (208);

passing, via the one or more hardware processors, each of the one or more test video clips to the trained second encoder of the trained neural network model, to obtain a latent space vector for each of the one or more test video clips (210); and

passing, via the one or more hardware processors, the latent space vector of each of the one or more test video clips, to the first decoder of the trained autoencoder network of the trained neural network model, to estimate the 3-D posture of the human present in each of the one or more test video clips (212).

3. The method (200) as claimed in claim 1, wherein each of (i) the first encoder of the autoencoder network, (ii) the first decoder of the autoencoder network, and (iii) the second encoder, comprises four residual network (ResNet) style blocks surrounded by one or more associated skip connections.

4. The method (200) as claimed in claim 3, wherein each of the four ResNet style blocks present in the first encoder of the autoencoder network and the second encoder, comprises two convolution layers each followed by a batch normalization layer, a rectified linear unit (ReLU) activation function layer, and a dropout layer.

5. The method (200) as claimed in claim 3, wherein each of the four ResNet style blocks present in the first decoder comprises two deconvolution layers each followed by a batch normalization layer, a rectified linear unit (ReLU) activation function layer, and a dropout layer.

6. A system (100), comprising:

a memory (102) storing instructions;

one or more input/output (I/O) interfaces (106);

one or more hardware processors (104) coupled to the memory (102) via the one or more I/O interfaces (106), wherein the one or more hardware processors (104) are configured by the instructions to:

receive one or more training datasets each comprising a plurality of training videos, wherein each of the plurality of training videos comprises one or more training video clips, wherein each of the one or more training video clips comprises a plurality of training video frames and a 3-Dimensional (3-D) posture annotated to each of the plurality of training video frames; and

train a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially, and wherein:

training the autoencoder network with the one or more training datasets comprises:

(a) passing 3-D postures annotated to the plurality of training video frames present in each training video clip at a time, of the one or more training video clips present in each of the one or more training datasets, to the first encoder, to obtain a latent space vector associated to the 3-D posture associated to each training video clip;

(b) passing the latent space vector associated to the 3-D postures associated to each training video clip, to the first decoder, to obtain reconstructed 3-D postures of the associated training video clip;

(c) calculating a value of a loss function of the autoencoder network, using (i) the 3-D postures of each training video clip and (ii) the reconstructed 3-D postures of the associated training video clip, wherein the loss function of the autoencoder network is a summation of an autoencoder reconstruction loss and a bone length consistency loss;

(d) updating one or more autoencoder network parameters of the autoencoder network based on the value of the loss function of the autoencoder network; and

(e) repeating the steps (a) through (d) until the value of the loss function of the autoencoder network is less than a first predefined threshold value, to obtain a trained autoencoder network; and

**characterised by**, training the second encoder with the one or more training datasets comprises:

(f) passing the 3-D postures annotated to each training video clip at a time, of the one or more training video clips present in each of the one or more training datasets, to the first encoder of the trained autoencoder network, to obtain a first latent space vector of the associated training video clip;

(g) passing the plurality of training video frames present in the associated training video clip, to the second encoder, to obtain a second latent space vector of the associated training video clip;

(h) calculating a value of the loss function of the second encoder, using (i) the first latent space vector of the associated training video clip and (ii) the second latent space vector of the associated training video clip, wherein the loss function of the second encoder is an encoder reconstruction loss;

(i) updating one or more second encoder network parameters of the second encoder based on the value of the loss function of the second encoder; and

(j) repeating the steps (f) through (i) until the value of the loss function of the second encoder is less than a second predefined threshold value, to obtain a trained second encoder.

7. The system (100) as claimed in claim 6, wherein the one or more hardware processors (104) are further configured to:

receive in real-time a test video of the human while performing a physical activity, through an acquisition device;

divide the test video into one or more test video clips based on presence of the human in the associated one or more test video clips, using a human detection technique;

pass each of the one or more test video clips to the trained second encoder of the trained neural network model, to obtain a latent space vector for each of the one or more test video clips; and

pass the latent space vector of each of the one or more test video clips, to the first decoder of the trained autoencoder network of the trained neural network model, to estimate the 3-D posture of the human present in each of the one or more test video clips.

8. The system (100) as claimed in claim 6, wherein each of (i) the first encoder of the autoencoder network, (ii) the first decoder of the autoencoder network, and (iii) the second encoder, comprises four residual network (ResNet) style blocks surrounded by one or more associated skip connections.

9. The system (100) as claimed in claim 8, wherein each of the four ResNet style blocks present in the first encoder of the autoencoder network and the second encoder, comprises two convolution layers each followed by a batch normalization layer, a rectified linear unit (ReLU) activation function layer, and a dropout layer.

10. The system (100) as claimed in claim 8, wherein each of the four ResNet style blocks present in the first decoder comprises two deconvolution layers each followed by a batch normalization layer, a rectified linear unit (ReLU) activation function layer, and a dropout layer.

11. One or more non-transitory machine-readable information storage mediums comprising one or more instructions which when executed by one or more hardware processors cause:

receiving one or more training datasets each comprising a plurality of training videos, wherein each of the plurality of training videos comprises one or more training video clips, wherein each of the one or more training video clips comprises a plurality of training video frames and a 3-Dimensional (3-D) posture annotated to each of the plurality of training video frames; and

training a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially, and wherein:

training the autoencoder network with the one or more training datasets comprises:

(a) passing 3-D postures annotated to the plurality of training video frames present in each training video clip at a time, of the one or more training video clips present in each of the one or more training datasets, to the first encoder, to obtain a latent space vector associated to the 3-D posture associated to each training video clip;
(b) passing the latent space vector associated to the 3-D postures associated to each training video clip, to the first decoder, to obtain reconstructed 3-D postures of the associated training video clip;
(c) calculating a value of a loss function of the autoencoder network, using (i) the 3-D postures of each training video clip and (ii) the reconstructed 3-D postures of the associated training video clip, wherein the loss function of the autoencoder network is a summation of an autoencoder reconstruction loss and a bone length consistency loss;
(d) updating one or more autoencoder network parameters of the autoencoder network based on the value of the loss function of the autoencoder network; and
(e) repeating the steps (a) through (d) until the value of the loss function of the autoencoder network is less than a first predefined threshold value, to obtain a trained autoencoder network; and

**characterised by**, training the second encoder with the one or more training datasets comprises:

(f) passing the 3-D postures annotated to each training video clip at a time, of the one or more training video clips present in each of the one or more training datasets, to the first encoder of the trained autoencoder network, to obtain a first latent space vector of the associated training video clip;
(g) passing the plurality of training video frames present in the associated training video clip, to the second encoder, to obtain a second latent space vector of the associated training video clip;
(h) calculating a value of the loss function of the second encoder, using (i) the first latent space vector of the associated training video clip and (ii) the second latent space vector of the associated training video clip, wherein the loss function of the second encoder is an encoder reconstruction loss;
(i) updating one or more second encoder network parameters of the second encoder based on the value of the loss function of the second encoder; and
(j) repeating the steps (f) through (i) until the value of the loss function of the second encoder is less than a second predefined threshold value, to obtain a trained second encoder.

12. The one or more non-transitory machine-readable information storage mediums of claim 11, wherein the one or more instructions which when executed by the one or more hardware processors further cause:

receiving in real-time a test video of the human while performing a physical activity, through an acquisition device;
dividing the test video into one or more test video clips based on presence of the human in the associated one or more test video clips, using a human detection technique;
passing each of the one or more test video clips to the trained second encoder of the trained neural network model, to obtain a latent space vector for each of the one or more test video clips; and
passing the latent space vector of each of the one or more test video clips, to the first decoder of the trained autoencoder network of the trained neural network model, to estimate the 3-D posture of the human present in each of the one or more test video clips.

13. The one or more non-transitory machine-readable information storage mediums of claim 11, wherein each of (i) the first encoder of the autoencoder network, (ii) the first decoder of the autoencoder network, and (iii) the second encoder, comprises four residual network (ResNet) style blocks surrounded by one or more associated skip connections.

14. The one or more non-transitory machine-readable information storage mediums of claim 13, wherein each of the four ResNet style blocks present in the first encoder of the autoencoder network and the second encoder, comprises two convolution layers each followed by a batch normalization layer, a rectified linear unit (ReLU) activation function layer, and a dropout layer.

15. The one or more non-transitory machine-readable information storage mediums of claim 13, wherein each of the four ResNet style blocks present in the first decoder comprises two deconvolution layers each followed by a batch normalization layer, a rectified linear unit (ReLU) activation function layer, and a dropout layer.

**Patentansprüche**

1. Prozessorimplementiertes Verfahren (200), umfassend:

Empfangen, über eine oder mehrere Eingabe/Ausgabe(I/O)-Schnittstellen, eines oder mehrerer Trainingsdatensätze, die jeweils eine Mehrzahl von Trainingsvideos umfassen, wobei jedes der Mehrzahl von Trainingsvideos einen oder mehrere Trainingsvideoclips umfasst, wobei jeder des einen oder der mehreren Trainingsvideoclips eine Mehrzahl von Trainingsvideoframes und eine 3-dimensionale (3-D) Haltung umfasst, die zu jedem der Mehrzahl von Trainingsvideoframes kommentiert ist (202); und

Trainieren, über einen oder mehrere Hardwareprozessoren, eines neuronalen Netzwerkmodells, das ein Autoencoder-Netzwerk und einen zweiten Codierer umfasst, mit dem einen oder den mehreren Trainingsdatensätzen, um ein trainiertes neuronales Netzwerkmodell zu erhalten, wobei das Autoencoder-Netzwerk einen ersten Codierer und einen ersten Decodierer umfasst, und wobei das trainierte neuronale Netzwerkmodell ein trainiertes Autoencoder-Netzwerk und einen trainierten zweiten Codierer umfasst, und das Autoencoder-Netzwerk und der zweite Codierer sequentiell trainiert werden (204), und wobei:

das Trainieren des Autoencoder-Netzwerks mit dem einen oder den mehreren Trainingsdatensätzen umfasst:

(a) Übergeben von 3-D-Haltungen, die zu der Mehrzahl von Trainingsvideoframes kommentiert sind, die in jedem Trainingsvideoclip zu einer Zeit vorhanden sind, des einen oder der mehreren Trainingsvideoclips, die in jedem des einen oder der mehreren Trainingsdatensätze vorhanden sind, an den ersten Codierer, um einen latenten Raumvektor zu erhalten, der den 3-D-Haltungen zugeordnet ist, die jedem Trainingsvideoclip zugeordnet sind (204a1);
(b) Übergeben des latenten Raumvektors, der den 3-D-Haltungen zugeordnet ist, die jedem Trainingsvideoclip zugeordnet sind, an den ersten Decodierer, um rekonstruierte 3-D-Haltungen des zugeordneten Trainingsvideoclips zu erhalten (204a2);
(c) Berechnen eines Werts einer Verlustfunktion des Autoencoder-Netzwerks unter Verwendung (i) der 3-D-Haltungen jedes Trainingsvideoclips und (ii) der rekonstruierten 3-D-Haltungen des zugeordneten Trainingsvideoclips, wobei die Verlustfunktion des Autoencoder-Netzwerks eine Summierung eines Autoencoder-Rekonstruktionsverlusts und eines Knochenlängenkonsistenzverlusts ist (204a3);
(d) Aktualisieren eines oder mehrerer Autoencoder-Netzwerkparameter des Autoencoder-Netzwerks basierend auf dem Wert der Verlustfunktion des Autoencoder-Netzwerks (204a4); und
(e) Wiederholen der Schritte (a) bis (d), bis der Wert der Verlustfunktion des Autoencoder-Netzwerks kleiner als ein erster vordefinierter Schwellenwert ist, um ein trainiertes Autoencoder-Netzwerk zu erhalten (204a5); und

**dadurch gekennzeichnet, dass**
das Trainieren des zweiten Codierers mit dem einen oder den mehreren Trainingsdatensätzen umfasst:

(f) Übergeben der 3-D-Haltungen, die zu jedem Trainingsvideoclip zu einer Zeit kommentiert sind, des einen oder der mehreren Trainingsvideoclips, die in jedem des einen oder der mehreren Trainingsdatensätze vorhanden sind, an den ersten Codierer des trainierten Autoencoder-Netzwerks, um einen ersten latenten Raumvektor des zugeordneten Trainingsvideoclips zu erhalten (204b1);

(g) Übergeben der Mehrzahl von Trainingsvideoframes, die in dem zugeordneten Trainingsvideoclip vorhanden sind, an den zweiten Codierer, um einen zweiten latenten Raumvektor des zugeordneten Trainingsvideoclips zu erhalten (204b2);

(h) Berechnen eines Werts der Verlustfunktion des zweiten Codierers unter Verwendung (i) des ersten latenten Raumvektors des zugeordneten Trainingsvideoclips und (ii) des zweiten latenten Raumvektors des zugeordneten Trainingsvideoclips, wobei die Verlustfunktion des zweiten Codierers ein Codierer-Rekonstruktionsverlust ist (204b3);

(i) Aktualisieren eines oder mehrerer zweiter Codierer-Netzwerkparameter des zweiten Codierers basierend auf dem Wert der Verlustfunktion des zweiten Codierers (204b4); und

(j) Wiederholen der Schritte (f) bis (i), bis der Wert der Verlustfunktion des zweiten Codierers kleiner als ein zweiter vordefinierter Schwellenwert ist, um einen trainierten zweiten Codierer zu erhalten (204b5).

2. Verfahren (200) nach Anspruch 1, ferner umfassend:

Empfangen, in Echtzeit, über die eine oder die mehreren Eingabe/Ausgabe(I/O)-Schnittstellen, eines Testvideos des Menschen, während er eine körperliche Aktivität durchführt, durch eine Erfassungsvorrichtung (206);

Teilen, über den einen oder die mehreren Hardwareprozessoren, des Testvideos in einen oder mehrere Testvideoclips basierend auf der Anwesenheit des Menschen in dem einen oder den mehreren zugeordneten Testvideoclips unter Verwendung einer Mensch-Detektionstechnik (208);

Übergeben, über den einen oder die mehreren Hardwareprozessoren, jedes des einen oder der mehreren Testvideoclips an den trainierten zweiten Codierer des trainierten neuronalen Netzwerkmodells, um einen latenten Raumvektor für jeden des einen oder der mehreren Testvideoclips zu erhalten (210); und

Übergeben, über den einen oder die mehreren Hardwareprozessoren, des latenten Raumvektors jedes des einen oder der mehreren Testvideoclips an den ersten Decodierer des trainierten Autoencoder-Netzwerks des trainierten neuronalen Netzwerkmodells, um die 3-D-Haltung des Menschen zu schätzen, der in jedem des einen oder der mehreren Testvideoclips vorhanden ist (212).

3. Verfahren (200) nach Anspruch 1, wobei jeder von (i) dem ersten Codierer des Autoencoder-Netzwerks, (ii) dem ersten Decodierer des Autoencoder-Netzwerks und (iii) dem zweiten Codierer vier Restnetzwerk(ResNet)-Stilblöcke umfasst, die von einer oder mehreren zugeordneten Sprungverbindungen umgeben sind.

4. Verfahren (200) nach Anspruch 3, wobei jeder der vier ResNet-Stilblöcke, die in dem ersten Codierer des Autoencoder-Netzwerks und dem zweiten Codierer vorhanden sind, zwei Faltungsschichten umfasst, denen jeweils eine Stapelnormalisierungsschicht, eine Aktivierungsfunktionsschicht einer gleichgerichteten linearen Einheit (ReLU) und eine Dropout-Schicht folgen.

5. Verfahren (200) nach Anspruch 3, wobei jeder der vier ResNet-Stilblöcke, die in dem ersten Decodierer vorhanden sind, zwei Entfaltungsschichten umfasst, denen jeweils eine Stapelnormalisierungsschicht, eine Aktivierungsfunktionsschicht einer gleichgerichteten linearen Einheit (ReLU) und eine Dropout-Schicht folgen.

6. System (100), umfassend:

einen Speicher (102), der Anweisungen speichert;

eine oder mehrere Eingabe/Ausgabe(I/O)-Schnittstellen (106);

einen oder mehrere Hardware-Prozessoren (104), die über die eine oder die mehreren I/O-Schnittstellen (106) mit dem Speicher (102) gekoppelt sind, wobei der eine oder die mehreren Hardware-Prozessoren (104) durch die Anweisungen konfiguriert sind zum:

Empfangen eines oder mehrerer Trainingsdatensätze, die jeweils eine Mehrzahl von Trainingsvideos umfassen, wobei jedes der Mehrzahl von Trainingsvideos einen oder mehrere Trainingsvideoclips umfasst, wobei jeder des einen oder der mehreren Trainingsvideoclips eine Mehrzahl von Trainingsvideoframes und eine 3-dimensionale (3-D) Haltung umfasst, die zu jedem der Mehrzahl von Trainingsvideoframes kommentiert ist; und

Trainieren eines neuronalen Netzwerkmodells, das ein Autoencoder-Netzwerk und einen zweiten Codierer umfasst, mit dem einen oder den mehreren Trainingsdatensätzen, um ein trainiertes neuronales Netzwerkmodell zu erhalten, wobei das Autoencoder-Netzwerk einen ersten Codierer und einen ersten Decodierer umfasst, und wobei das trainierte neuronale Netzwerkmodell ein trainiertes Autoencoder-Netzwerk und einen trainierten zweiten Codierer umfasst, und das Autoencoder-Netzwerk und der zweite Codierer sequentiell trainiert werden, und wobei:

das Trainieren des Autoencoder-Netzwerks mit dem einen oder den mehreren Trainingsdatensätzen umfasst:

(a) Übergeben von 3-D-Haltungen, die zu der Mehrzahl von Trainingsvideoframes kommentiert sind, die in jedem Trainingsvideoclip zu einer Zeit vorhanden sind, des einen oder der mehreren Trainingsvideoclips, die in jedem des einen oder der mehreren Trainingsdatensätze vorhanden sind, an den ersten Codierer, um einen latenten Raumvektor zu erhalten, der der 3-D-Haltung zugeordnet ist, die jedem Trainingsvideoclip zugeordnet ist;

(b) Übergeben des latenten Raumvektors, der den 3-D-Haltungen zugeordnet ist, die jedem Trainingsvideoclip zugeordnet sind, an den ersten Decodierer, um rekonstruierte 3-D-Haltungen des zugeordneten Trainingsvideoclips zu erhalten;

(c) Berechnen eines Werts einer Verlustfunktion des Autoencoder-Netzwerks unter Verwendung (i) der 3-D-Haltungen jedes Trainingsvideoclips und (ii) der rekonstruierten 3-D-Haltungen des zugeordneten Trainingsvideoclips, wobei die Verlustfunktion des Autoencoder-Netzwerks eine Summierung eines Autoencoder-Rekonstruktionsverlusts und eines Knochenlängenkonsistenzverlusts ist;

(d) Aktualisieren eines oder mehrerer Autoencoder-Netzwerkparameter des Autoencoder-Netzwerks basierend auf dem Wert der Verlustfunktion des Autoencoder-Netzwerks; und

(e) Wiederholen der Schritte (a) bis (d), bis der Wert der Verlustfunktion des Autoencoder-Netzwerks kleiner als ein erster vordefinierter Schwellenwert ist, um ein trainiertes Autoencoder-Netzwerk zu erhalten; und

**dadurch gekennzeichnet, dass**
das Trainieren des zweiten Codierers mit dem einen oder den mehreren Trainingsdatensätzen umfasst:

(f) Übergeben der 3-D-Haltungen, die zu jedem Trainingsvideoclip zu einer Zeit kommentiert sind, des einen oder der mehreren Trainingsvideoclips, die in jedem des einen oder der mehreren Trainingsdatensätze vorhanden sind, an den ersten Codierer des trainierten Autoencoder-Netzwerks, um einen ersten latenten Raumvektor des zugeordneten Trainingsvideoclips zu erhalten;

(g) Übergeben der Mehrzahl von Trainingsvideoframes, die in dem zugeordneten Trainingsvideoclip vorhanden sind, an den zweiten Codierer, um einen zweiten latenten Raumvektor des zugeordneten Trainingsvideoclips zu erhalten;

(h) Berechnen eines Werts der Verlustfunktion des zweiten Codierers unter Verwendung (i) des ersten latenten Raumvektors des zugeordneten Trainingsvideoclips und (ii) des zweiten latenten Raumvektors des zugeordneten Trainingsvideoclips, wobei die Verlustfunktion des zweiten Codierers ein Codierer-Rekonstruktionsverlust ist;

(i) Aktualisieren eines oder mehrerer zweiter Codierer-Netzwerkparameter des zweiten Codierers basierend auf dem Wert der Verlustfunktion des zweiten Codierers; und

(j) Wiederholen der Schritte (f) bis (i), bis der Wert der Verlustfunktion des zweiten Codierers kleiner als ein zweiter vordefinierter Schwellenwert ist, um einen trainierten zweiten Codierer zu erhalten.

7. System (100) nach Anspruch 6, wobei der eine oder die mehreren Hardwareprozessoren (104) ferner konfiguriert sind zum:

Empfangen, in Echtzeit, eines Testvideos des Menschen, während er eine körperliche Aktivität durchführt, durch eine Erfassungsvorrichtung;
Teilen des Testvideos in einen oder mehrere Testvideoclips basierend auf der Anwesenheit des Menschen in dem einen oder den mehreren zugeordneten Testvideoclips unter Verwendung einer Mensch-Detektionstechnik;
Übergeben jedes des einen oder der mehreren Testvideoclips an den trainierten zweiten Codierer des trainierten neuronalen Netzwerkmodells, um einen latenten Raumvektor für jeden des einen oder der mehreren Testvideoclips zu erhalten; und
Übergeben des latenten Raumvektors jedes des einen oder der mehreren Testvideoclips an den ersten Decodierer des trainierten Autoencoder-Netzwerks des trainierten neuronalen Netzwerkmodells, um die 3-D-Haltung des Menschen zu schätzen, der in jedem des einen oder der mehreren Testvideoclips vorhanden ist.

8. System (100) nach Anspruch 6, wobei jeder von (i) dem ersten Codierer des Autoencoder-Netzwerks, (ii) dem ersten Decodierer des Autoencoder-Netzwerks und (iii) dem zweiten Codierer vier Restnetzwerk(ResNet)-Stilblöcke umfasst, die von einer oder mehreren zugeordneten Sprungverbindungen umgeben sind.

9. System (100) nach Anspruch 8, wobei jeder der vier ResNet-Stilblöcke, die in dem ersten Codierer des Autoencoder-Netzwerks und dem zweiten Codierer vorhanden sind, zwei Faltungsschichten umfasst, denen jeweils eine Stapelnormalisierungsschicht, eine Aktivierungsfunktionsschicht einer gleichgerichteten linearen Einheit (ReLU) und eine Dropout-Schicht folgen.

10. System (100) nach Anspruch 8, wobei jeder der vier ResNet-Stilblöcke, die in dem ersten Decodierer vorhanden sind, zwei Entfaltungsschichten umfasst, denen jeweils eine Stapelnormalisierungsschicht, eine Aktivierungsfunktionsschicht einer gleichgerichteten linearen Einheit (ReLU) und eine Dropout-Schicht folgen.

11. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:

Empfangen eines oder mehrerer Trainingsdatensätze, die jeweils eine Mehrzahl von Trainingsvideos umfassen, wobei jedes der Mehrzahl von Trainingsvideos einen oder mehrere Trainingsvideoclips umfasst, wobei jeder des einen oder der mehreren Trainingsvideoclips eine Mehrzahl von Trainingsvideoframes und eine 3-dimensionale (3-D) Haltung umfasst, die zu jedem der Mehrzahl von Trainingsvideoframes kommentiert ist; und

Trainieren eines neuronalen Netzwerkmodells, das ein Autoencoder-Netzwerk und einen zweiten Codierer umfasst, mit dem einen oder den mehreren Trainingsdatensätzen, um ein trainiertes neuronales Netzwerkmodell zu erhalten, wobei das Autoencoder-Netzwerk einen ersten Codierer und einen ersten Decodierer umfasst, und wobei das trainierte neuronale Netzwerkmodell ein trainiertes Autoencoder-Netzwerk und einen trainierten zweiten Codierer umfasst, und das Autoencoder-Netzwerk und der zweite Codierer sequentiell trainiert werden, und wobei:

das Trainieren des Autoencoder-Netzwerks mit dem einen oder den mehreren Trainingsdatensätzen umfasst:

(a) Übergeben von 3-D-Haltungen, die zu der Mehrzahl von Trainingsvideoframes kommentiert sind, die in jedem Trainingsvideoclip zu einer Zeit vorhanden sind, des einen oder der mehreren Trainingsvideoclips, die in jedem des einen oder der mehreren Trainingsdatensätze vorhanden sind, an den ersten Codierer, um einen latenten Raumvektor zu erhalten, der der 3-D-Haltung zugeordnet ist, die jedem Trainingsvideoclip zugeordnet ist;

(b) Übergeben des latenten Raumvektors, der den 3-D-Haltungen zugeordnet ist, die jedem Trainingsvideoclip zugeordnet sind, an den ersten Decodierer, um rekonstruierte 3-D-Haltungen des zugeordneten Trainingsvideoclips zu erhalten;

(c) Berechnen eines Werts einer Verlustfunktion des Autoencoder-Netzwerks unter Verwendung (i) der 3-D-Haltungen jedes Trainingsvideoclips und (ii) der rekonstruierten 3-D-Haltungen des zugeordneten Trainingsvideoclips, wobei die Verlustfunktion des Autoencoder-Netzwerks eine Summierung eines Autoencoder-Rekonstruktionsverlusts und eines Knochenlängenkonsistenzverlusts ist;

(d) Aktualisieren eines oder mehrerer Autoencoder-Netzwerkparameter des Autoencoder-Netzwerks basierend auf dem Wert der Verlustfunktion des Autoencoder-Netzwerks; und

(e) Wiederholen der Schritte (a) bis (d), bis der Wert der Verlustfunktion des Autoencoder-Netzwerks kleiner als ein erster vordefinierter Schwellenwert ist, um ein trainiertes Autoencoder-Netzwerk zu erhalten; und

**dadurch gekennzeichnet, dass**
das Trainieren des zweiten Codierers mit dem einen oder den mehreren Trainingsdatensätzen umfasst:

(f) Übergeben der 3-D-Haltungen, die zu jedem Trainingsvideoclip zu einer Zeit kommentiert sind, des einen oder der mehreren Trainingsvideoclips, die in jedem des einen oder der mehreren Trainingsdatensätze vorhanden sind, an den ersten Codierer des trainierten Autoencoder-Netzwerks, um einen ersten latenten Raumvektor des zugeordneten Trainingsvideoclips zu erhalten;

(g) Übergeben der Mehrzahl von Trainingsvideoframes, die in dem zugeordneten Trainingsvideoclip vorhanden sind, an den zweiten Codierer, um einen zweiten latenten Raumvektor des zugeordneten Trainingsvideoclips zu erhalten;

(h) Berechnen eines Werts der Verlustfunktion des zweiten Codierers unter Verwendung (i) des ersten latenten Raumvektors des zugeordneten Trainingsvideoclips und (ii) des zweiten latenten Raumvektors des zugeordneten Trainingsvideoclips, wobei die Verlustfunktion des zweiten Codierers ein Codierer-Rekonstruktionsverlust ist;

(i) Aktualisieren eines oder mehrerer zweiter Codierer-Netzwerkparameter des zweiten Codierers basierend auf dem Wert der Verlustfunktion des zweiten Codierers; und

(j) Wiederholen der Schritte (f) bis (i), bis der Wert der Verlustfunktion des zweiten Codierers kleiner als ein zweiter vordefinierter Schwellenwert ist, um einen trainierten zweiten Codierer zu erhalten.

12. Ein oder mehrere nichtflüchtige maschinenlesbare Informationsspeichermedien nach Anspruch 11, wobei die eine oder die mehreren Anweisungen, die bei Ausführung durch den einen oder die mehreren Hardwareprozessoren ferner bewirken:

Empfangen, in Echtzeit, eines Testvideos des Menschen, während er eine körperliche Aktivität durchführt, durch eine Erfassungsvorrichtung;

Teilen des Testvideos in einen oder mehrere Testvideoclips basierend auf der Anwesenheit des Menschen in dem einen oder den mehreren zugeordneten Testvideoclips unter Verwendung einer Mensch-Detektionstechnik;

Übergeben jedes des einen oder der mehreren Testvideoclips an den trainierten zweiten Codierer des trainierten neuronalen Netzwerkmodells, um einen latenten Raumvektor für jeden des einen oder der mehreren Testvideoclips zu erhalten; und

Übergeben des latenten Raumvektors jedes des einen oder der mehreren Testvideoclips an den ersten Decodierer des trainierten Autoencoder-Netzwerks des trainierten neuronalen Netzwerkmodells, um die 3-D-Haltung des Menschen zu schätzen, der in jedem des einen oder der mehreren Testvideoclips vorhanden ist.

13. Ein oder mehrere nichtflüchtige maschinenlesbare Informationsspeichermedien nach Anspruch 11, wobei jeder von (i) dem ersten Codierer des Autoencoder-Netzwerks, (ii) dem ersten Decodierer des Autoencoder-Netzwerks und (iii) dem zweiten Codierer vier Restnetzwerk(ResNet)-Stilblöcke umfasst, die von einer oder mehreren zugeordneten Sprungverbindungen umgeben sind.

14. Ein oder mehrere nichtflüchtige maschinenlesbare Informationsspeichermedien nach Anspruch 13, wobei jeder der vier ResNet-Stilblöcke, die in dem ersten Codierer des Autoencoder-Netzwerks und dem zweiten Codierer vorhanden sind, zwei Faltungsschichten umfasst, denen jeweils eine Stapelnormalisierungsschicht, eine Aktivierungsfunktionsschicht einer gleichgerichteten linearen Einheit (ReLU) und eine Dropout-Schicht folgen.

15. Ein oder mehrere nichtflüchtige maschinenlesbare Informationsspeichermedien nach Anspruch 13, wobei jeder der vier ResNet-Stilblöcke, die in dem ersten Decodierer vorhanden sind, zwei Entfaltungsschichten umfasst, denen jeweils eine Stapelnormalisierungsschicht, eine Aktivierungsfunktionsschicht einer gleichgerichteten linearen Einheit (ReLU) und eine Dropout-Schicht folgen.

## Revendications

1. Procédé mis en œuvre par processeur (200), comprenant :

la réception, via une ou plusieurs interfaces d'entrée/sortie (E/S), d'un ou plusieurs ensembles de données d'entraînement comprenant chacun une pluralité de vidéos d'entraînement, dans lequel chacune de la pluralité de vidéos d'entraînement comprend un ou plusieurs clips vidéo d'entraînement, dans lequel chacun des un ou plusieurs clips vidéo d'entraînement comprend une pluralité de trames vidéo d'entraînement et une posture tridimensionnelle (3-D) annotée à chacune de la pluralité de trames vidéo d'entraînement (202) ; et

l'entraînement, via un ou plusieurs processeurs matériels, d'un modèle de réseau neuronal comprenant un réseau autocodeur et un second codeur, avec les un ou plusieurs ensembles de données d'entraînement, pour obtenir un modèle de réseau neuronal entraîné, dans lequel le réseau autocodeur comprend un premier codeur et un premier décodeur, et dans lequel le modèle de réseau neuronal entraîné comprend un réseau autocodeur entraîné et un second codeur entraîné, et le réseau autocodeur et le second codeur sont entraînés séquentiellement (204), et dans lequel :

l'entraînement du réseau autocodeur avec les un ou plusieurs ensembles de données d'entraînement comprend :

(a) le passage de postures 3-D annotées à la pluralité de trames vidéo d'entraînement présentes dans chaque clip vidéo d'entraînement à la fois, des un ou plusieurs clips vidéo d'entraînement présents dans chacun des un ou plusieurs ensembles de données d'entraînement, au premier codeur, pour obtenir un vecteur d'espace latent associé aux postures 3-D associées à chaque clip vidéo d'entraînement (204a1) ;

(b) le passage du vecteur d'espace latent associé aux postures 3-D associées à chaque clip vidéo d'entraînement, au premier décodeur, pour obtenir des postures 3-D reconstruites du clip vidéo d'entraînement associé (204a2) ;

(c) le calcul d'une valeur d'une fonction de perte du réseau autocodeur, en utilisant (i) les postures 3-D de chaque clip vidéo d'entraînement et (ii) les postures 3-D reconstruites du clip vidéo d'entraînement associé, dans lequel la fonction de perte du réseau autocodeur est une somme d'une perte de reconstruction autocodeur et d'une perte de cohérence de longueur osseuse (204a3) ;

(d) la mise à jour d'un ou plusieurs paramètres de réseau autocodeur du réseau autocodeur sur la base de la valeur de la fonction de perte du réseau autocodeur (204a4) ; et

(e) la répétition des étapes (a) à (d) jusqu'à ce que la valeur de la fonction de perte du réseau autocodeur soit inférieure à une première valeur de seuil prédéfinie, pour obtenir un réseau autocodeur entraîné (204a5) ; et

**caractérisé en ce que**

l'entraînement du second codeur avec les un ou plusieurs ensembles de données d'entraînement comprend :

(f) le passage des postures 3-D annotées à chaque clip vidéo d'entraînement à la fois, des un ou plusieurs clips vidéo d'entraînement présents dans chacun des un ou plusieurs ensembles de données d'entraînement, au premier codeur du réseau autocodeur entraîné, pour obtenir un premier vecteur d'espace latent du clip vidéo d'entraînement associé (204b1) ;

(g) le passage de la pluralité de trames vidéo d'entraînement présentes dans le clip vidéo d'entraînement associé, au second codeur, pour obtenir un second vecteur d'espace latent du clip vidéo d'entraînement associé (204b2) ;

(h) le calcul d'une valeur de la fonction de perte du second codeur, en utilisant (i) le premier vecteur d'espace latent du clip vidéo d'entraînement associé et (ii) le second vecteur d'espace latent du clip vidéo d'entraînement associé, dans lequel la fonction de perte du second codeur est une perte de reconstruction de codeur (204b3) ;

(i) la mise à jour d'un ou plusieurs paramètres de réseau du second codeur sur la base de la valeur de la fonction de perte du second codeur (204b4) ; et

(j) la répétition des étapes (f) à (i) jusqu'à ce que la valeur de la fonction de perte du second codeur soit inférieure à une seconde valeur de seuil prédéfinie, pour obtenir un second codeur entraîné (204b5).

2. Procédé (200) selon la revendication 1, comprenant en outre :

la réception en temps réel, via les une ou plusieurs interfaces d'entrée/sortie (E/S), d'une vidéo de test de l'humain tout en effectuant une activité physique, via un dispositif d'acquisition (206) ;

la division, via les un ou plusieurs processeurs matériels, de la vidéo de test en un ou plusieurs clips vidéo de test sur la base de la présence de l'humain dans les un ou plusieurs clips vidéo de test associés, en utilisant une technique de détection d'humain (208) ;

le passage, via les un ou plusieurs processeurs matériels, de chacun des un ou plusieurs clips vidéo de test au second codeur entraîné du modèle de réseau neuronal entraîné, pour obtenir un vecteur d'espace latent pour chacun des un ou plusieurs clips vidéo de test (210) ; et

le passage, via les un ou plusieurs processeurs matériels, du vecteur d'espace latent de chacun des un ou plusieurs clips vidéo de test, au premier décodeur du réseau autocodeur entraîné du modèle de réseau neuronal entraîné, pour estimer la posture 3-D de l'humain présent dans chacun des un ou plusieurs clips vidéo de test (212).

3. Procédé (200) selon la revendication 1, dans lequel chacun de (i) le premier codeur du réseau autocodeur, (ii) le premier décodeur du réseau autocodeur, et (iii) le second codeur, comprend quatre blocs de style de réseau résiduel (ResNet) entourés par une ou plusieurs connexions résiduelles associées.

4. Procédé (200) selon la revendication 3, dans lequel chacun des quatre blocs de style ResNet présents dans le premier codeur du réseau autocodeur et le second codeur, comprend deux couches de convolution suivies chacune par une couche de normalisation par lots, une couche de fonction d'activation d'unité linéaire rectifiée (ReLU), et une couche de dropout.

5. Procédé (200) selon la revendication 3, dans lequel chacun des quatre blocs de style ResNet présents dans le premier décodeur comprend deux couches de déconvolution suivies chacune par une couche de normalisation par lots, une couche de fonction d'activation d'unité linéaire rectifiée (ReLU), et une couche de dropout.

6. Système (100), comprenant :

une mémoire (102) stockant des instructions ;
une ou plusieurs interfaces d'entrée/sortie (E/S) (106) ;
un ou plusieurs processeurs matériels (104) couplés à la mémoire (102) via les une ou plusieurs interfaces E/S (106), dans lequel les un ou plusieurs processeurs matériels (104) sont configurés par les instructions pour :

recevoir un ou plusieurs ensembles de données d'entraînement comprenant chacun une pluralité de vidéos d'entraînement, dans lequel chacune de la pluralité de vidéos d'entraînement comprend un ou plusieurs clips vidéo d'entraînement, dans lequel chacun des un ou plusieurs clips vidéo d'entraînement comprend une pluralité de trames vidéo d'entraînement et une posture tridimensionnelle (3-D) annotée à chacune de la pluralité de trames vidéo d'entraînement ; et
entraîner un modèle de réseau neuronal comprenant un réseau autocodeur et un second codeur, avec les un ou plusieurs ensembles de données d'entraînement, pour obtenir un modèle de réseau neuronal entraîné, dans lequel le réseau autocodeur comprend un premier codeur et un premier décodeur, et dans lequel le modèle de réseau neuronal entraîné comprend un réseau autocodeur entraîné et un second codeur entraîné, et le réseau autocodeur et le second codeur sont entraînés séquentiellement, et dans lequel :

l'entraînement du réseau autocodeur avec les un ou plusieurs ensembles de données d'entraînement comprend :

(a) le passage de postures 3-D annotées à la pluralité de trames vidéo d'entraînement présentes dans chaque clip vidéo d'entraînement à la fois, des un ou plusieurs clips vidéo d'entraînement présents dans chacun des un ou plusieurs ensembles de données d'entraînement, au premier codeur, pour obtenir un vecteur d'espace latent associé à la posture 3-D associée à chaque clip vidéo d'entraînement ;
(b) le passage du vecteur d'espace latent associé aux postures 3-D associées à chaque clip vidéo d'entraînement, au premier décodeur, pour obtenir des postures 3-D reconstruites du clip vidéo d'entraînement associé ;
(c) le calcul d'une valeur d'une fonction de perte du réseau autocodeur, en utilisant (i) les postures 3-D de chaque clip vidéo d'entraînement et (ii) les postures 3-D reconstruites du clip vidéo d'entraînement associé, dans lequel la fonction de perte du réseau autocodeur est une somme d'une perte de reconstruction autocodeur et d'une perte de cohérence de longueur osseuse ;
(d) la mise à jour d'un ou plusieurs paramètres de réseau autocodeur du réseau autocodeur sur la base de la valeur de la fonction de perte du réseau autocodeur ; et
(e) la répétition des étapes (a) à (d) jusqu'à ce que la valeur de la fonction de perte du réseau autocodeur soit inférieure à une première valeur de seuil prédéfinie, pour obtenir un réseau autocodeur entraîné ; et

**caractérisé en ce que**
l'entraînement du second codeur avec les un ou plusieurs ensembles de données d'entraînement comprend :

(f) le passage des postures 3-D annotées à chaque clip vidéo d'entraînement à la fois, des un ou plusieurs clips vidéo d'entraînement présents dans chacun des un ou plusieurs ensembles de données d'entraînement, au premier codeur du réseau autocodeur entraîné, pour obtenir un premier vecteur d'espace latent du clip vidéo d'entraînement associé ;
(g) le passage de la pluralité de trames vidéo d'entraînement présentes dans le clip vidéo d'entraînement associé, au second codeur, pour obtenir un second vecteur d'espace latent du clip vidéo d'entraînement associé ;

(h) le calcul d'une valeur de la fonction de perte du second codeur, en utilisant (i) le premier vecteur d'espace latent du clip vidéo d'entraînement associé et (ii) le second vecteur d'espace latent du clip vidéo d'entraînement associé, dans lequel la fonction de perte du second codeur est une perte de reconstruction de codeur ;

(i) la mise à jour d'un ou plusieurs paramètres de réseau du second codeur sur la base de la valeur de la fonction de perte du second codeur ; et

(j) la répétition des étapes (f) à (i) jusqu'à ce que la valeur de la fonction de perte du second codeur soit inférieure à une seconde valeur de seuil prédéfinie, pour obtenir un second codeur entraîné.

7. Système (100) selon la revendication 6, dans lequel les un ou plusieurs processeurs matériels (104) sont en outre configurés pour :

recevoir en temps réel une vidéo de test de l'humain tout en effectuant une activité physique, via un dispositif d'acquisition ;

diviser la vidéo de test en un ou plusieurs clips vidéo de test sur la base de la présence de l'humain dans les un ou plusieurs clips vidéo de test associés, en utilisant une technique de détection d'humain ;

passer chacun des un ou plusieurs clips vidéo de test au second codeur entraîné du modèle de réseau neuronal entraîné, pour obtenir un vecteur d'espace latent pour chacun des un ou plusieurs clips vidéo de test ; et

passer le vecteur d'espace latent de chacun des un ou plusieurs clips vidéo de test, au premier décodeur du réseau autocodeur entraîné du modèle de réseau neuronal entraîné, pour estimer la posture 3-D de l'humain présent dans chacun des un ou plusieurs clips vidéo de test.

8. Système (100) selon la revendication 6, dans lequel chacun de (i) le premier codeur du réseau autocodeur, (ii) le premier décodeur du réseau autocodeur, et (iii) le second codeur, comprend quatre blocs de style de réseau résiduel (ResNet) entourés par une ou plusieurs connexions résiduelles associées.

9. Système (100) selon la revendication 8, dans lequel chacun des quatre blocs de style ResNet présents dans le premier codeur du réseau autocodeur et le second codeur, comprend deux couches de convolution suivies chacune par une couche de normalisation par lots, une couche de fonction d'activation d'unité linéaire rectifiée (ReLU), et une couche de dropout.

10. Système (100) selon la revendication 8, dans lequel chacun des quatre blocs de style ResNet présents dans le premier décodeur comprend deux couches de déconvolution suivies chacune par une couche de normalisation par lots, une couche de fonction d'activation d'unité linéaire rectifiée (ReLU), et une couche de dropout.

11. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'un ou plusieurs ensembles de données d'entraînement comprenant chacun une pluralité de vidéos d'entraînement, dans lequel chacune de la pluralité de vidéos d'entraînement comprend un ou plusieurs clips vidéo d'entraînement, dans lequel chacun des un ou plusieurs clips vidéo d'entraînement comprend une pluralité de trames vidéo d'entraînement et une posture tridimensionnelle (3-D) annotée à chacune de la pluralité de trames vidéo d'entraînement ; et

l'entraînement d'un modèle de réseau neuronal comprenant un réseau autocodeur et un second codeur, avec les un ou plusieurs ensembles de données d'entraînement, pour obtenir un modèle de réseau neuronal entraîné, dans lequel le réseau autocodeur comprend un premier codeur et un premier décodeur, et dans lequel le modèle de réseau neuronal entraîné comprend un réseau autocodeur entraîné et un second codeur entraîné, et le réseau autocodeur et le second codeur sont entraînés séquentiellement, et dans lequel :

l'entraînement du réseau autocodeur avec les un ou plusieurs ensembles de données d'entraînement comprend :

(a) le passage de postures 3-D annotées à la pluralité de trames vidéo d'entraînement présentes dans chaque clip vidéo d'entraînement à la fois, des un ou plusieurs clips vidéo d'entraînement présents dans chacun des un ou plusieurs ensembles de données d'entraînement, au premier codeur, pour obtenir un vecteur d'espace latent associé à la posture 3-D associée à chaque clip vidéo d'entraînement ;

(b) le passage du vecteur d'espace latent associé aux postures 3-D associées à chaque clip vidéo d'entraînement, au premier décodeur, pour obtenir des postures 3-D reconstruites du clip vidéo

23

d'entraînement associé ;

(c) le calcul d'une valeur d'une fonction de perte du réseau autocodeur, en utilisant (i) les postures 3-D de chaque clip vidéo d'entraînement et (ii) les postures 3-D reconstruites du clip vidéo d'entraînement associé, dans lequel la fonction de perte du réseau autocodeur est une somme d'une perte de reconstruction autocodeur et d'une perte de cohérence de longueur osseuse ;

(d) la mise à jour d'un ou plusieurs paramètres de réseau autocodeur du réseau autocodeur sur la base de la valeur de la fonction de perte du réseau autocodeur ; et

(e) la répétition des étapes (a) à (d) jusqu'à ce que la valeur de la fonction de perte du réseau autocodeur soit inférieure à une première valeur de seuil prédéfinie, pour obtenir un réseau autocodeur entraîné ; et

**caractérisé en ce que**

l'entraînement du second codeur avec les un ou plusieurs ensembles de données d'entraînement comprend :

(f) le passage des postures 3-D annotées à chaque clip vidéo d'entraînement à la fois, des un ou plusieurs clips vidéo d'entraînement présents dans chacun des un ou plusieurs ensembles de données d'entraînement, au premier codeur du réseau autocodeur entraîné, pour obtenir un premier vecteur d'espace latent du clip vidéo d'entraînement associé ;

(g) le passage de la pluralité de trames vidéo d'entraînement présentes dans le clip vidéo d'entraînement associé, au second codeur, pour obtenir un second vecteur d'espace latent du clip vidéo d'entraînement associé ;

(h) le calcul d'une valeur de la fonction de perte du second codeur, en utilisant (i) le premier vecteur d'espace latent du clip vidéo d'entraînement associé et (ii) le second vecteur d'espace latent du clip vidéo d'entraînement associé, dans lequel la fonction de perte du second codeur est une perte de reconstruction de codeur ;

(i) la mise à jour d'un ou plusieurs paramètres de réseau du second codeur sur la base de la valeur de la fonction de perte du second codeur ; et

(j) la répétition des étapes (f) à (i) jusqu'à ce que la valeur de la fonction de perte du second codeur soit inférieure à une seconde valeur de seuil prédéfinie, pour obtenir un second codeur entraîné.

12. Un ou plusieurs supports de stockage d'informations lisibles par machine non transitoires selon la revendication 11, dans lequel les une ou plusieurs instructions qui, lorsqu'elles sont exécutées par les un ou plusieurs processeurs matériels, amènent en outre :

la réception en temps réel d'une vidéo de test de l'humain tout en effectuant une activité physique, via un dispositif d'acquisition ;

la division de la vidéo de test en un ou plusieurs clips vidéo de test sur la base de la présence de l'humain dans les un ou plusieurs clips vidéo de test associés, en utilisant une technique de détection d'humain ;

le passage de chacun des un ou plusieurs clips vidéo de test au second codeur entraîné du modèle de réseau neuronal entraîné, pour obtenir un vecteur d'espace latent pour chacun des un ou plusieurs clips vidéo de test ; et

le passage du vecteur d'espace latent de chacun des un ou plusieurs clips vidéo de test, au premier décodeur du réseau autocodeur entraîné du modèle de réseau neuronal entraîné, pour estimer la posture 3-D de l'humain présent dans chacun des un ou plusieurs clips vidéo de test.

13. Un ou plusieurs supports de stockage d'informations lisibles par machine non transitoires selon la revendication 11, dans lequel chacun de (i) le premier codeur du réseau autocodeur, (ii) le premier décodeur du réseau autocodeur, et (iii) le second codeur, comprend quatre blocs de style de réseau résiduel (ResNet) entourés par une ou plusieurs connexions résiduelles associées.

14. Un ou plusieurs supports de stockage d'informations lisibles par machine non transitoires selon la revendication 13, dans lequel chacun des quatre blocs de style ResNet présents dans le premier codeur du réseau autocodeur et le second codeur, comprend deux couches de convolution suivies chacune par une couche de normalisation par lots, une couche de fonction d'activation d'unité linéaire rectifiée (ReLU), et une couche de dropout.

15. Un ou plusieurs supports de stockage d'informations lisibles par machine non transitoires selon la revendication 13, dans lequel chacun des quatre blocs de style ResNet présents dans le premier décodeur comprend deux couches de déconvolution suivies chacune par une couche de normalisation par lots, une couche de fonction d'activation d'unité linéaire rectifiée (ReLU), et une couche de dropout.

System **100**

**108**

Memory **102**

Modules **102a**

Repository
**102b**

I/O interface(s)
**106**

Hardware
processor(s)
**104**

FIG. 1

200

Receive one or more training datasets each comprising a plurality of training videos, wherein each of the plurality of training videos comprises one or more training video clips, wherein each of the one or more training video clips comprises a plurality of training video frames and a 3-D posture annotated to each of the plurality of training video frames

202

Train a neural network model comprising an autoencoder network and a second encoder, with the one or more training datasets, to obtain a trained neural network model, wherein the autoencoder network comprises a first encoder and a first decoder, and wherein the trained neural network model comprises a trained autoencoder network and a trained second encoder, and the autoencoder network and the second encoder are trained sequentially, and wherein training the autoencoder network with the one or more training datasets comprises:

204

passing the 3-D postures annotated to the plurality of training video frames present in each training video clip at a time, of the one or more training video clips present in each of the one or more training datasets, to the first encoder, to obtain a latent space vector associated to the 3-D postures associated to each training video clip

204a1

passing the latent space vector associated to the 3-D postures associated to each training video clip, to the first decoder, to obtain reconstructed 3-D postures of the associated training video clip

204a2

calculating a value of a loss function of the autoencoder network, using the (i) the 3-D postures of each training video clip and (ii) the reconstructed 3-D postures of the associated training video clip, wherein the loss function of the autoencoder network is a summation of an autoencoder reconstruction loss and a bone length consistency loss

204a3

updating one or more autoencoder network parameters of the autoencoder network based on the value of the loss function of the autoencoder network

204a4

repeating the steps (204a1) through (204a4) until the value of the loss function of the autoencoder network is less than a first predefined threshold value, to obtain a trained autoencoder network

204a5

A

FIG. 2A

A

training the second encoder with the one or more training datasets comprises ⟋ 204

passing the 3-D postures annotated to each training video clip at a time, of the one or more training video clips present in each of the one or more training datasets, to the first encoder of the trained autoencoder network, to obtain a first latent space vector of the associated training video clip ⟋ 204b1

passing the plurality of training video frames present in the associated training video clip, to the second encoder, to obtain a second latent space vector of the associated training video clip ⟋ 204b2

calculating a value of the loss function of the second encoder, using (i) the first latent space vector of the associated training video clip and (ii) the second latent space vector of the associated training video clip, wherein the loss function of the second encoder is an encoder reconstruction loss ⟋ 204b3

updating one or more second encoder network parameters of the second encoder based on the value of the loss function of the second encoder ⟋ 204b4

repeating the steps (204b1) through (204b4) until the value of the loss function of the second encoder is less than a second predefined threshold value, to obtain a trained second encoder ⟋ 204b5

B

FIG. 2B

B

| | |
|---|---|
| receive in real-time a test video of the human while performing a physical activity, through an acquisition device | 206 |
| divide the test video into one or more test video clips based on presence of the human in the associated one or more test video clips, using a human detection technique | 208 |
| pass each of the one or more test video clips to the trained second encoder of the trained neural network model, to obtain a latent space vector for each of the one or more test video clips | 210 |
| pass the latent space vector of each of the one or more test video clips, to the first decoder of the trained autoencoder network of the trained neural network model, to estimate the 3-D posture of the human present in each of the one or more test video clips | 212 |

FIG. 2C

(a)

(b)

Latent features

Evaluation path

(a) Autoencoder (AE) for learning pose latent space

(b) Encoder (E) for learning mapping from image space to the latent space

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421032922

**Non-patent literature cited in the description**

- **PAVLLO et al.** 3D Human Pose Estimation in Video With Temporal Convolutions and Semi-Supervised Training. *CVPR*, 15 June 2019, 7745-7754
- **KOCABAS et al.** VIBE: Video Inference for Human Body Pose and Shape Estimation. *CVPR*, 13 June 2020, 5252-5262
- **THEODORIS et al.** Cross-modal Variational Alignment of Latent Spaces. *CVPRW*, 14 June 2020, 4127-4136